Europäisches Patentamt

European Patent Office

Office européen des brevets

(19)

(11) Veröffentlichungsnummer: **0 148 372**
A1

# (12) EUROPÄISCHE PATENTANMELDUNG

(21) Anmeldenummer: 84113821.7

(22) Anmeldetag: 15.11.84

(51) Int. Cl.⁴: **F 16 L 37/08**

(30) Priorität: 15.11.83 DK 5210/83

(43) Veröffentlichungstag der Anmeldung: 17.07.85
Patentblatt 85/29

(84) Benannte Vertragsstaaten: **BE DE FR GB IT NL SE**

(71) Anmelder: **Bruun, Christian Broder, Varming Vesterby 28,
DK-6760 Ribe (DK)**

(72) Erfinder: **Bruun, Christian Broder, Varming Vesterby 28,
DK-6760 Ribe (DK)**

(74) Vertreter: **Patentanwälte, Dipl.-Ing. Klaus Westphal Dr.
rer. nat. Bernd Mussgnug Dr. rer. nat. Otto Buchner,
Flossmannstrasse 30a, D-8000 München 60 (DE)**

(54) Verbindung zwischen Muffe und Rohr.

(57) Zwischen einer Muffe (30) und einem Rohr (10) wird eine drucksichere Verbindung ohne Gebrauch von Gewinde oder Schnappverschlüssen hergestellt.

Die Verbindung wird dadurch hergestellt, daß sich zwischen Muffe und Rohr ein ebener Verschlußring (20) aus Federstahl von größerer Dicke als der lichten Weite zwischen Rohr und Muffe befindet.

In eine Muffe mit einem vorspringenden Anschlag (40) in der Mitte und einem Verschlußring (20) in jeder Hälfte der Muffe wird einfach ein Rohr von beiden Enden eingeführt, bis die Rohre den vorspringenden Anschlag (40) erreichen. Damit ist die drucksichere Verbindung hergestellt.

Übliche Wasserrohre können auf diese Art und Weise zum Gebrauch in der allgemeinen öffentlichen Wasserversorgung zusammengebaut werden.

EP 0 148 372 A1

## Verbindung zwischen Muffe und Rohr

Die Erfindung betrifft eine Verbindung zwischen einer Muffe und einem Rohr, besonders mit einer oder mehreren Gummidichtungen.

Das Rohr kann Flüssigkeiten, besonders Wasser unter Wasserwerkdruck, oder Gase leiten, und es kann aus Stahl, Metall oder Kunststoff sein.

Bekannte Rohrverbindungen, die imstande sein müssen, einem Druck zu widerstehen, werden mittels Gewinde oder eines Schnappverschlusses zusammengehalten.

Der Zweck der Erfindung ist, eine Verbindung zwischen einer Muffe und einem Rohr anzugeben, bei der Dichtigkeit erreicht wird, wenn lediglich das Rohr in die Muffe eingeschoben wird.

Das kennzeichnende Merkmal der Rohrverbindung gemäß der Erfindung ist, daß zwischen Muffe und Rohr ein ebener Verschlußring aus Federstahl angebracht ist, dessen

- Außendurchmesser größer ist als der Innendurchmesser der Muffe, und

- Innendurchmesser kleiner ist als der Außendurchmesser des Rohres, und

- der in einer Rille an der Innenseite der Muffe oder an der Außenseite des Rohres angebracht ist.

Es hat sich gezeigt, daß eine solche Verbindung drucksicher ist, beispielsweise widersteht die Verbindung einem Druck der Größenordnung von 20 Atm. bei den Rohrabmessungen, die in der allgemeinen Wasserversorgung zum Haushaltgebrauch benutzt werden.

Gewindeherstellung, Gebrauch von Schneidöl und Rohrzangen entfallen.

Die Verbindung zwischen Rohr und Muffe kann durch einen Schlag mit einem Hammer gelöst werden.

Erfindungsgemäß ist es besonders vorteilhaft, daß sich an der Innenseite der Muffe in deren Mitte ein vorspringender Anschlagring befindet.

Durch diese Ausgestaltung kann man einfach ein Rohr von jedem Ende in die Muffe einschieben, bis sie sich an der Mitte treffen.

- 3 -                     0148372

Es hat sich erfindungsgemäß als zweckmäßig erwiesen, daß sich zu beiden Seiten jedes Verschlußringes eine Gummidichtung befindet.

Die Erfindung soll unter Bezugnahme auf die Zeichnungen genauer erläutert werden. Diese Zeichnungen zeigen

Abb. 1    eine aus Muffe, Verschlußring und Rohr bestehende Verbindung, bei der aus Rücksicht auf die Übersichtlichkeit gewisse Teile weggelassen sind, und

Abb. 2    eine perspektivische Darstellung eines Ausschnitts der Muffe.

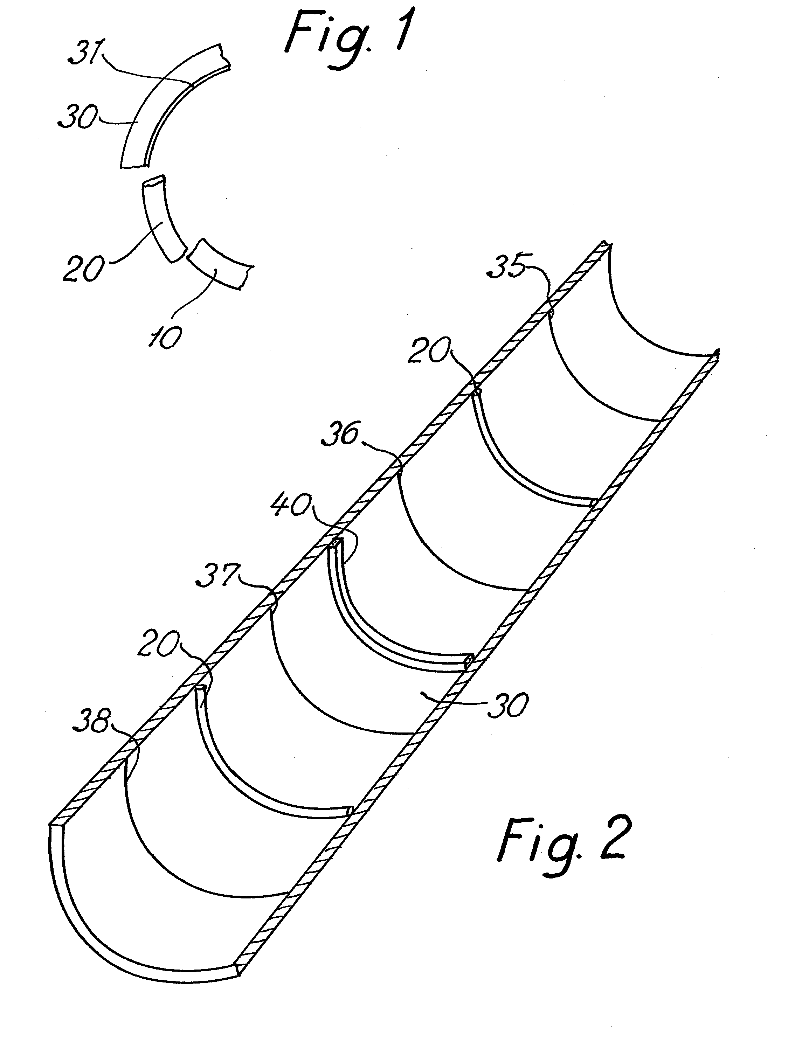

Das auf der Zeichnung gezeigte Rohr 10 (Abb. 1) ist zum Einführen in eine Muffe 30 (Abb. 1 und 2) vorgesehen. Diese besitzt einen nach innen vorspringenden Anschlag 40, der die Muffe in zwei gleich große Hälften teilt.

Ungefähr in der Mitte jeder Hälfte ist in einer Rille 31 (Abb. 1) ein Verschlußring 20 (Abb. 1 und 2) aus Federstahl angebracht.

Zu jeder Seite jedes Verschlußringes 20 ist eine Gummidichtung 35 - 38 (Abb. 2) angeordnet.

Zur Herstellung einer Verbindung zwischen zwei Rohren sind diese von jedem Ende in die Muffe einzuschieben.

Ein 19 mm-Wasserrohr wird mit einem anderen gleicher Art mittels einer Muffe mit einem Innendurchmesser von 20 mm und Verschlußringen aus Federstahl mit einem Außendurchmesser von 20,3 mm verbunden.

Die Tiefe der Rille an der Innenseite der Muffe ist
beispielsweise 0,05 mm.

Eine solche Verbindung widersteht einem Druck von
20 Atm. und eignet sich mithin gut zur Verwendung in
der allgemeinen Wasserversorgung.

Der Innendurchmesser des Verschlußringes ist je nach
Rohrabmessung und Druck mit einem um 0,4 bis 0,9 mm
kleineren Durchmesser zu berechnen.

PATENTANSPRÜCHE

1. Verbindung zwischen einer Muffe (30) und einem Rohr (10), besonders mit einer oder mehreren Gummidichtungen (35 - 38), dadurch gekennzeichnet, daß zwischen der Muffe (30) und dem Rohr (10) ein ebener Verschlußring (20) aus Federstahl angeordnet ist, dessen

- Außendurchmesser größer ist als der Innendurchmesser der Muffe, und

- Innendurchmesser kleiner ist als der Außendurchmesser des Rohres, und

- der in einer Rille (31) an der Innenseite der Muffe (30) oder an der Außenseite des Rohres angebracht ist.

2. Verbindung gemäß Anspruch 1, gekennzeichnet durch einen vorspringenden Anschlagring (40) an der Innenseite der Muffe (30) in deren Mitte.

3. Verbindung gemäß den Ansprüchen 1 - 2, dadurch gekennzeichnet, daß sich zu beiden Seiten des Verschlußringes (20) eine Gummidichtung (35 - 38) befindet.

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| X | US-A-3 920 270 (H.R. BABB Jr.)<br><br>* Zusammenfassung; Figur 4 *<br><br>--- | 1-3 | F 16 L 37/08 |
| X | US-A-4 186 946 (J.P. SNOW)<br><br>* Insgesamt *<br><br>--- | 1-3 | |
| X | DE-A-1 928 060 (E. IMHOF)<br><br>* Figuren 1,2 *<br><br>--- | 1-3 | |
| X | US-A-2 453 597 (E.F. SARVER)<br><br>* Figuren 1-4 *<br><br>--- | 1,3 | RECHERCHIERTE SACHGEBIETE (Int. Cl.4) |
| A | CH-A- 469 933 (ROLLMAPLAST AG)<br><br>* Figuren 1,2 *<br><br>--- | 3 | F 16 L |
| A | FR-A-2 286 992 (SEMPERIT AG)<br><br>* Figur 3 *<br><br>----- | 3 | |

Der vorliegende Recherchenbericht wurde für alle Patentansprüche erstellt.

| Recherchenort | Abschlußdatum der Recherche | Prüfer |
|---|---|---|
| DEN HAAG | 18-02-1985 | ANGIUS P. |